(19) Europäisches Patentamt
European Patent Office
Office européen des brevets

(11) **EP 1 085 251 B1**

(12) **EUROPÄISCHE PATENTSCHRIFT**

(45) Veröffentlichungstag und Bekanntmachung des Hinweises auf die Patenterteilung:
**28.12.2016 Patentblatt 2016/52**

(21) Anmeldenummer: **00119630.2**

(22) Anmeldetag: **08.09.2000**

(51) Int Cl.:
*G02B 6/00* (2006.01)  *F21V 5/02* (2006.01)
*F21S 8/00* (2006.01)  *F21S 2/00* (2016.01)
*F21S 8/04* (2006.01)  *F21V 3/04* (2006.01)
*F21V 7/00* (2006.01)  *F21V 8/00* (2006.01)
*F21Y 103/00* (2016.01)

(54) **Hohllichtleiterleuchte mit modularer Lichtauskoppeleinrichtung**

Hollow light conductor luminaire having a modular light extraction device

Luminaire à conducteur de lumière creux avec un dispositif d'extraction de la lumière modulaire

(84) Benannte Vertragsstaaten:
**AT BE CH CY DE DK ES FI FR GB GR IE IT LI LU MC NL PT SE**
Benannte Erstreckungsstaaten:
**SI**

(30) Priorität: **17.09.1999 DE 19944743**
**09.03.2000 DE 10011257**

(43) Veröffentlichungstag der Anmeldung:
**21.03.2001 Patentblatt 2001/12**

(73) Patentinhaber: **Siteco Beleuchtungstechnik GmbH**
**83301 Traunreut (DE)**

(72) Erfinder:
• **Belloni, Paola**
**83278 Traunstein (DE)**
• **Brüggemann, Jürgen**
**83301 Traunreut (DE)**
• **Ferdows, Sonja**
**83278 Traunstein (DE)**

• **Königstein, Hans-Peter**
**83349 Palling (DE)**
• **Kroke, Martin**
**83301 Traunreut (DE)**
• **Priller, Reinhold**
**83404 Ainring (DE)**
• **Wolkersdorfer, Josef**
**83278 Traunstein (DE)**
• **Klimiont, Thomas**
**90584 Allersberg (DE)**

(74) Vertreter: **Schohe, Stefan et al**
**Boehmert & Boehmert**
**Anwaltspartnerschaft mbB**
**Patentanwälte Rechtsanwälte**
**Pettenkoferstrasse 20-22**
**80336 München (DE)**

(56) Entgegenhaltungen:
EP-A- 0 293 182    DE-A- 3 937 256
US-A- 4 260 220    US-A- 4 542 449
US-A- 4 615 579    US-A- 4 969 075
US-A- 5 079 680

**Beschreibung**

Die Erfindung betrifft eine Leuchte gemäß dem Oberbegriff des Anspruchs 1. Eine derartige Leuchte ist in der US 4 542 449 beschrieben.

Derartige Leuchten erfordern zum Auskoppeln von Licht einer Lichtaustrittsfläche eine lichtbrechende Struktur, beispielsweise in Form von geradlinigen Prismen mit einem dreieckförmigen Querschnitt, welche in die Oberfläche einer Platte, welche eine Öffnung des Hohllichtleiters verschließt, angebracht ist. Problematisch ist dabei, daß die Tatsache, daß nahezu bei jeder Leuchte die Lichtaustrittsfläche anders bemessen ist und dementsprechend für die jeweilige Lichtaustrittsfläche einer konkreten Leuchte jeweils individuell eine entsprechende Platte mit einer lichtbrechenden Struktur und entsprechenden Abmessungen gefertigt werden müßte, einer kostengünstigen Fertigung in hohen Stückzahlen bislang entgegenstand.

Es ist die Aufgabe der Erfindung, eine Leuchte der eingangs genannten Art zur Verfügung zu stellen, welche kostengünstiger herstellbar ist.

Erfindungsgemäß wird diese Aufgabe gelöst durch eine Leuchte, insbesondere eine Innenraumleuchte, z.B. eine Einbau-, Anbau- oder Pendelleuchte, mit mindestens einem Hohllichtleiter, in den von einer oder mehreren Lampen Licht eingestrahlt wird, und mit mindestens einer Lichtauskoppeleinrichtung zum Auskoppeln von Licht aus dem Hohllichtleiter zu einer Lichtaustrittsfläche, wobei die Lichtauskoppeleinrichtung mindestens eine Grenzfläche zwischen zwei Medien mit einem unterschiedlichen Brechungsindex aufweist, die mit einer lichtbrechenden Struktur versehen ist, welche in mindestens einer Ebene senkrecht zu der Lichtaustrittsfläche auf sie einfallendes Licht gerichtet ablenkt und dadurch die Lichtstärkeverteilungskurve an einer Lichtaustrittsfläche beeinflußt, welche dadurch gekennzeichnet ist, daß die Lichtauskoppeleinrichtung mindestens eine im wesentlichen formstabile Einheit mit mindestens zwei miteinander verbundenen, übereinander angeordneten flächenförmigen Elementen, von denen zumindest eines eine lichtbrechende und Licht gerichtet ablenkende Struktur, wie vorangehend erwähnt, aufweist bzw. aus einer solchen Einheit bzw. solchen Einheiten besteht, wobei diese Einheit in eine Öffnung des Gehäuses des Hohllichtleiters eingesetzt ist, so daß sie den Hohlraum des Hohllichtleiters begrenzt. Die besagten flächenförmigen Elemente können z.B. Platten und/oder Folien sein.

Die lichtbrechende Struktur kann derart ausgebildet sein, daß die Lichtstärke oberhalb und/oder unterhalb eines Grenzwinkels zu einer Senkrechten zu der Lichtaustrittsfläche reduziert wird. Insbesondere kann vorgesehen sein, daß die lichtbrechende Struktur eine Lichtabstrahlung oberhalb eines Grenzwinkels zu einer Senkrechten zu der Lichtaustrittsfläche im wesentlichen verhindert, derart, daß in dieser Ebene eine Abschirmung des an der Lichtaustrittsfläche austretenden Lichts herbeigeführt wird.

Unter einer Abschirmung wird die Absenkung der mittleren Leuchtdichte an der Lichtaustrittsfläche oberhalb eines Grenzwinkels zu einer Senkrechten zu der Lichtaustrittsfläche verstanden.

Die Erfindung kann insbesondere vorsehen, daß die Lichtauskoppeleinrichtung mindestens eine Einheit mit mindestens zwei miteinander verbundenen, übereinander angeordneten Platten aufweist bzw. aus einer solchen Einheit bzw. solchen Einheiten besteht. Eine oder mehrere dieser Platten können mit einer lichtbrechenden Struktur wie vorangehend erwähnt versehen sein. Es kann auch vorgesehen sein, daß zwischen Platten in dieser Einheit eine oder mehrere Folien mit einer lichtbrechenden Struktur wie vorangehend erwähnt eingelegt sind, wobei die Platten, zwischen denen sich diese Folie bzw. diese Folien befinden, gemäß einer Ausführungsform keine derartige lichtbrechende Struktur aufweisen können. Insbesondere kann vorgesehen sein, daß diese Einheit aus zwei Platten ohne eine derartige lichtbrechende Struktur, vorzugsweise mit glatten Oberflächen, sowie einer oder mehreren Folien besteht, welche sich zwischen diesen beiden Platten befinden.

Vorzugsweise enthält die Einheit mindestens ein formstabiles Element. Beispielsweise können eine oder mehrere Folien über einer Platte angeordnet und in einer geeigneten Weise an der Platte gehalten werden. Insbesondere können die Folien an der Platte durch ein oder mehrere Rahmenelemente oder einen umlaufenden Rahmen an einer Platte gehalten werden, was nachfolgend noch näher erläutert wird.

Erfindungsgemäß werden im wesentlichen selbsttragende Einheiten mit festen Abmessungen geschaffen, so daß eine individuelle Befestigung oder Abstützung der strukturierten Platten der Lichtauskoppeleinrichtung im Inneren der Lichtaustrittsfläche durch Gehäuseelemente, wie Streben oder dgl., nicht nötig ist.

Gemäß einer Ausführungsform weist die Lichtauskoppeleinrichtung mehrere nebeneinander angeordnete Platten oder Folien auf, die jeweils mit einer eine Abschirmung erzeugenden lichtbrechenden Struktur auf einer Grundfläche versehen sind.

Auf diesen nebeneinander angeordneten Platten oder Folien können jeweils eine oder mehrere Platten oder Folien angeordnet sein.

Erfindungsgemäß kann vorgesehen sein, daß die Lichtauskoppeleinrichtung mindestens einen Stapel von mindestens zwei flächenförmigen Elementen, vorzugsweise gleicher Grundfläche, aufweist, die jeweils mit einer lichtbrechenden Struktur zur Erzeugung einer Abschirmung versehen sind, wobei die lichtbrechende Struktur eines ersten Elementes in einer ersten Ebene senkrecht zu der Lichtaustrittsfläche die Lichtauskopplung oberhalb eines Grenzwinkels zu der Senkrechten zu der Lichtaustrittsfläche im wesentlichen verhindert, in der die lichtbrechende Struktur eines zweiten Elements die Lichtabstrahlung nicht oder nur oberhalb eines größeren Grenzwinkels im wesentlichen verhindert, und die lichtbrechende Struktur des zweiten Elements in einer zweiten Ebene senkrecht zu der Lichtaustrittsfläche eine Lichtabstrahlung oberhalb eines Grenzwinkels zu einer Senkrechten zu der Lichtaustrittsfläche im wesentlichen verhindert, in welcher das erste Element die Lichtauskopplung nicht oder nur oberhalb eines größeren Grenzwinkels im wesentlichen verhindert. Ein solches flächenförmiges Element kann eine Platte oder Folie sein.

Die Erfindung kann insbesondere vorsehen, daß die Lichtauskoppeleinrichtung mehrere derartige Stapel aufweist, die nebeneinander angeordnet sind, um die Lichtauskoppelfläche der Lichtauskoppeleinrichtung zu bilden.

Die Erfindung kann vorsehen, daß die lichtbrechende Struktur der flächenförmigen Elemente linienförmige lichtbrechende Strukturelemente aufweist oder aus diesen besteht, welche Seitenwände im wesentlichen parallel zur Linienrichtung aufweisen, die an dem freien Ende der Strukturelemente einen Winkel einschließen, der größer als 90° ist, vorzugsweise in einem Bereich von 90° bis 130° liegt und gemäß einer besonderen Ausführungsform der Erfindung in einem Bereich von 110° bis 128° liegen kann. Die vorangehend angegebenen Winkelbereiche von 90° bis 130° bzw. 110° bis 128° sind besonders für Platten aus einem Material mit einem Brechungsindex von ungefähr 1,49 bevorzugt, können jedoch auch bei Materialien mit einem anderen Brechungsindex verwendet werden, der nicht allzusehr von 1,49 verschieden ist. Dies gilt für gängige Materialien wie Polymethylmethacrylat oder Glas. Grundsätzlich können allerdings für Materialien mit von 1,49 verschiedenem Brechungsindex die bevorzugten Winkelbereiche verschieden sein, wobei sich diese bevorzugten Winkelbereiche für diese Brechungsindizes dadurch ermitteln lassen, daß die gleichen Abschirmwinkel für einen vorgegebenen Grenzwert der Leuchtdichte erzielt werden wie in dem vorangehend angegebenen Winkelbereich von 90° bis 130° bzw. 110° bis 128° bei einem Brechungsindex von 1,49. Grundsätzlich sollte gemäß den bevorzugten Ausführungsformen dieser Winkel jedoch unabhängig vom Brechungsindex größer als 90° sein. Vorzugsweise ist dieser Winkel bei allen Strukturelementen gleich, die im übrigen auch alle die gleiche Querschnittsform und gegebenenfalls auch identische Abmessungen haben können. Für Leuchten ohne Abschirmung können andere Winkel zweckmäßig sein, wobei von 90° verschiedene Winkel bevorzugt sind.

Der Grenzwert der Leuchtdichte für eine Abschirmung kann entsprechend geltenden Normen bzw. Normvorschlägen bei 200 cd/m$^2$, 500 cd/m$^2$ oder 1000 cd/m$^2$ liegen. Der Abschirmwinkel liegt bei gängigen Anwendungen im Bereich von mehr als 45°, bevorzugt in einem Bereich von 50° bis 75°, insbesondere 50° bis 65°.

Die lichtbrechenden Strukturelemente haben gemäß der bevorzugten Ausführungsform der Erfindung entlang der Linienrichtung einen konstanten Querschnitt, der insbesondere die Form eines Dreiecks annehmen kann. Die Seitenwände der Elemente müssen jedoch nicht eben sein, sondern können auch gekrümmt sein. Während gemäß einer bevorzugten Ausführungsform die Seitenwände an dem freien Ende der Strukturelemente direkt aneinander anschließen, kann auch vorgesehen sein, daß das freie Ende der Strukturelemente abgeflacht ist und die Seitenwände durch eine ebene oder gekrümmte Fläche verbunden sind. Im Fall von ebenen Seitenflächen oder Seitenflächen mit einem ebenen Abschnitt an dem freien Ende ist der vorangehend genannte Winkel dann durch die imaginäre Verlängerung der ebenen Seitenwände bzw. der ebenen Abschnitte der Seitenwände bestimmt. Im Fall von gekrümmten Seitenwänden kann der vorangehend erwähnte Winkel dem Winkel eines Dreiecks entsprechen, dem der Querschnitt der lichtbrechenden Elemente optimal, d.h. mit möglichst geringer Flächenabweichung zwischen der Fläche des Dreiecks und der Querschnittsfläche des lichtbrechenden Elements, einbeschrieben ist. Im Fall einer konvexen, d.h. nach außen gekrümmten Seitenwand, würde dieser Winkel durch den Schnittwinkel von zwei Tangenten gebildet, die an die Seitenlinien des Querschnitts des lichtbrechenden Strukturelementes angelegt werden, während im Fall einer konkaven, d.h. nach innen gekrümmten Seitenwand dieser Winkel durch zwei Geraden festgelegt würde, die jeweils zwischen dem Kopfpunkt und dem Fußpunkt mit einer Seitenlinie des Querschnitts, d.h. einer der Seitenwand im Querschnitt entsprechenden Linie, gelegt sind.

Erfindungsgemäß kann vorgesehen sein, daß in zwei übereinander angeordneten flächenförmigen Elementen jeweils eine lichtbrechende Struktur mit linienförmigen Strukturelementen ausgebildet ist, wobei die Linien, welche die Geometrie der Struktur der ersten Platte definieren, mit den Linien, welche die Geometrie der Struktur der zweiten Platte definieren, einen nicht verschwindenden Winkel einschließen und vorzugsweise senkrecht auf diesen stehen.

Die lichtbrechenden Strukturen lassen sich z.B. dadurch herstellen, daß eine Platte oder Folie aus einem gängigen lichtdurchlässigen Material, wie Glas, Polyester, Polystyrol, Polycarbonat, PET oder Polymethylmethacrylat, auf einer Fläche entsprechend bearbeitet oder geformt wird. Alternativ kann auch eine Folie, welche die lichtbrechende Struktur enthält, auf eine solche Platte aufgeklebt werden.

Gemäß einer Ausführungsform der Erfindung ist vorgesehen, daß eines von zwei oder mehr übereinander liegenden flächenförmigen Elementen einen mit einer lichtbrechenden Struktur versehenen Bereich und einen an diesen strukturierten Bereich anschließenden Verbindungsbereich mit einer glatten Oberfläche aufweist, wobei dieses Element mit einer weiteren Platte oder einem Halteelement zum Halten eines weiteren Elements, z.B. einem Rahmen oder Rahmenelement, in diesem Verbindungsbereich verbunden, vorzugsweise verklebt ist.

Der Verbindungsbereich kann insbesondere ein vorzugsweise um den gesamten Umfang umlaufender Randbereich sein, so daß der Bereich, in welchem die Platten miteinander verbunden sind, den strukturierten Bereich vollständig einschließt.

Es kann auch vorgesehen sein, daß zumindest eines von mehreren übereinanderliegenden flächenförmigen Elementen zumindest abschnittsweise von einem oder mehreren Rahmenelementen, welche dieses und ggf. weitere Elemente übergreifen, an einem anderen Element gehalten wird.

Insbesondere kann ein Rahmen oder Rahmenelement vorgesehen sein, welches das bzw. die flächenförmigen Elemente übergreift und an dem anderen Element hält. Beispielsweise kann der Rahmen bzw. das Rahmenelement eine oder mehrere Platten übergreifen und an einer anderen Platte halten.

Während gemäß den derzeit bevorzugten Ausführungsformen ein umlaufender Rahmen bevorzugt ist, können zur Verbindung der Platten oder Folien nur an einem Teil der Seiten einer Platte entsprechende Rahmenelemente vorgesehen sein, während die anderen Seiten nicht oder auf andere Weise verbunden sind. Ebenso können Rahmenelemente auch nur an einer oder mehreren Ecken vorgesehen sein und die an diese Ecken angrenzenden Seiten freilassen. Das Rahmenelement muß sich auch nicht notwendig über die gesamte Länge oder Breite der Platte oder Folie erstrecken, sondern es können grundsätzlich auch entlang einer Seite mehrere beabstandete Rahmenelemente vorhanden sein, welche die Platten oder Folien zusammenhalten. Der Rahmen oder das Rahmenelement kann die gesamten übereinanderliegenden Platten oben und unten übergreifen und beispielsweise mit den Seitenflächen der Platten verklebt sein. Ein festes Verbinden des Rahmens mit den Platten ist allerdings nicht unbedingt notwendig, wenn der Rahmen die Platten insgesamt formschlüssig einschließt.

Der Rahmen oder das Rahmenelement kann aus einem durchsichtigen Material bestehen oder auch undurchsichtig sein. Es kann in entgegengesetzte Richtungen weisende Flansche zum Verbinden mit den Platten an einem Ende oder an entgegengesetzten Enden aufweisen und/oder als Grundform die Form eines U besitzen.

Um zu verhindern, daß bei einem ganz oder teilweise lichtdurchlässigen Rahmen in dem Bereich des Rahmens Licht ausgekoppelt wird, das nicht den Abschirmbedingungen genügt, kann auf der Lichtaustrittsseite der Lichtauskoppeleinrichtung der Bereich des Rahmens oder der Rahmenelemente lackiert, mit einem Siebdruck versehen, verspiegelt oder sandgestrahlt sein. Grundsätzlich kann dieser Bereich jedoch auch ganz oder teilweise lichtdurchlässig bleiben, nämlich dann, wenn die Lichtanteile mit einem Austrittswinkel oberhalb des Abschirmwinkels so klein sind, daß der Grenzwert für die mittlere Leuchtdichte der gesamten Lichtaustrittsfläche, einschließlich der Bereiche, in denen die lichtbrechenden Strukturen wirksam sind, nicht überschritten wird.

Erfindungsgemäß kann auch vorgesehen sein, daß ein Rahmen oder Rahmenelement mit der Grundseite eines flächenförmigen Elements, insbesondere einer Platte, fest verbunden ist.

Beispielsweise kann eines der beiden Elemente, wie vorangehend erläutert, einen nicht strukturierten Randbereich aufweisen, auf den der Rahmen aufgeklebt ist. In diesem Fall ist das mit dem Rahmen verbundene Element etwas breiter als das von dem Rahmen übergriffene Element.

Gemäß einer Ausführungsform der Erfindung wird die Einheit durch Platten und/oder Folien gebildet, welche jeweils eine lichtbrechende Struktur zur Erzeugung einer Abschirmung aufweisen.

Diese Platten und/oder Folien können in der Weise, wie sie vorangehend erläutert wurde, miteinander verklebt oder durch einen Rahmen zusammengehalten werden. Sie können auch durch eine geeignete Klemmeinrichtung zusammengehalten werden.

Gemäß einer bevorzugten Ausführungsform der Erfindung sind das bzw. die Elemente mit der einer Abschirmung erzeugenden lichtbrechenden Struktur auf einer Trägerplatte angeordnet, welche keine lichtbrechende Struktur, die Licht gerichtet ablenkt, aufweist, und vorzugsweise zwei parallele glatte Grundflächen besitzt.

Die Trägerplatte kann größere Abmessungen aufweisen als die auf ihr angeordneten Platten.

Insbesondere kann vorgesehen sein, daß auf einer Trägerplatte mindestens zwei Elemente mit einer eine gerichtete Lichtablenkung erzeugenden lichtbrechenden Struktur nebeneinander angeordnet und mit der Trägerplatte verbunden sind, wobei auf diesen nebeneinander angeordneten Elementen weitere Elemente angeordnet sein können, so daß auf der Trägerplatte mehrere nebeneinanderliegende Stapel solcher Elemente gebildet werden. Im Rahmen der Erfindung kann vorgesehen sein, daß die Trägerplatte nicht vollständig mit den auf ihr angeordneten Elementen und gegebenenfalls zugehörigen Rahmenelementen abgedeckt ist, so daß ein oder mehrere Bereiche freibleiben, in denen die Lichtauskoppeleinrichtung keine eine gerichtete Lichtablenkung erzeugende lichtbrechende Struktur aufweist. Sofern der Beitrag des aus diesen Bereichen austretenden Lichts zu einer mittleren Leuchtdichte für bestimmte Winkel zu einer Senkrechten zu der Lichtaustrittsfläche führt, die aufgrund einer geforderten Abschirmung oder aus anderen Gründen nicht erwünscht ist, können diese Bereiche durch Lackieren, Siebdruck, Sandstrahlen, Beschichten oder in anderer geeigneter Weise behandelt sein, so daß der Lichtdurchtritt durch diese Bereiche verringert oder verhindert wird oder daß Licht in diesen Bereichen gestreut wird.

Die Erfindung kann vorsehen, daß die mit einer eine gerichtete Lichtabschirmung erzeugenden lichtbrechenden Struktur versehenen Elemente durch mindestens ein mit der Trägerplatte verbundenes Rahmenelement an dieser gehalten werden, welches eines oder mehrere der Elemente mit einer lichtbrechenden Struktur übergreift. Die Trägerplatte kann dabei über die Rahmenelemente hinaus an einer oder mehreren Seiten vorstehen, so daß nicht strukturierte Bereiche vorhanden sind, die in der vorangehend beschriebenen Weise behandelt sein können.

Insbesondere kann vorgesehen sein, daß ein Rahmenelement zwei oder mehr nebeneinanderliegende derartige Elemente gleichzeitig übergreift.

Alternativ kann die Trägerplatte mit den strukturierten Elementen in jeder anderen geeigneten Weise verbunden werden, insbesondere in der Art, wie dies vorangehend erläutert wurde. Beispielsweise kann das auf der Trägerplatte aufliegende strukturierte Element mit der Trägerplatte verklemmt sein oder einen nicht strukturierten Rand aufweisen, der mit der Trägerplatte verbunden, z.B. verklebt ist.

Auf den nebeneinander liegenden strukturierten Elementen können weitere Elemente, insbesondere solche mit einer eine Abschirmung erzeugenden oder anderweitig Licht gerichtet ablenkenden Struktur lichtbrechenden Struktur, angeordnet sein, so daß insgesamt auf der Trägerplatte mehrere Stapel von mindestens zwei Elementen, die vorzugsweise jeweils eine eine Licht gerichtet ablenkende lichtbrechende Struktur aufweisen, angeordnet sind und in geeigneter Weise, beispielsweise durch ein Rahmenelement oder einen Rahmen, an der Trägerplatte gehalten werden.

Gemäß einem weiteren Aspekt der Erfindung ist vorgesehen, daß die Einheit eine im wesentlichen glatte Grundfläche auf ihren Außenseiten aufweist und die die Abschirmung erzeugende strukturierte Grenzfläche oder Grenzflächen im Inneren der Einheit liegen.

Die Einheit gemäß dieser Ausführungsform ist leicht zu reinigen. Dadurch, daß die strukturierten Grenzflächen im Inneren der Einheit liegen, sind diese besser gegen Beschädigung und gegen Verschmutzen geschützt.

Insbesondere kann vorgesehen sein, daß die Elemente einer Einheit in einer Weise verbunden sind, daß der Bereich der strukturierten Grenzfläche oder Grenzflächen im Inneren der Einheit dicht abgeschlossen ist.

Auf diese Weise kann das Eindringen von Staub oder anderen Verunreinigungen in den Bereich der Prismenstrukturen zumindest behindert und gegebenenfalls sogar verhindert werden.

In einer Abwandlung der vorangehend beschriebenen Ausführungsform kann vorgesehen sein, daß die Außenseite der Einheit nur an einer Grundfläche im wesentlichen glatt ist, während an der gegenüberliegenden Grundfläche auf der Außenseite der Einheit eine eine Abschirmung erzeugende Struktur vorgesehen ist. In diesem Fall ist die Einheit in der Leuchte vorzugsweise so angeordnet, daß die strukturierte Grundfläche auf der Außenseite zu dem Hohllichtleiter hinweist.

Gemäß einer besonderen Ausführungsform ist vorgesehen, daß zumindest zwei, vorzugsweise alle nebeneinander angeordneten strukturierten Elemente dieselbe Form und dieselbe Grundfläche aufweisen.

Die Grundfläche der Platten kann insbesondere quadratisch oder rechteckig sein. Es kann auch vorgesehen sein, daß die Platten eine andere Form haben, z. B. die Form von Kreissektoren, Vielecken oder Ringabschnitten. Grundsätzlich ist es auch möglich, z. B. bei einer Rundleuchte, die Platten in Form von Kreisringen bzw. Kreisscheiben vorzusehen.

Gemäß dieser Ausführungsform kann die Leuchte standardisiert werden, indem Platten oder Folien mit einer lichtbrechenden Struktur verwendet werden, die fest vorgegebene Abmessungen haben. Diese Platten bzw. Folien können dann in größerer Stückzahl und somit kostengünstiger hergestellt werden.

Die Erfindung stellt auch ein Leuchtensystem, bestehend aus mehreren Leuchten, insbesondere Innenraumleuchten, z.B. Einbau-, Anbau- und/oder Pendelleuchten, zur Verfügung, die jeweils mindestens einen Hohllichtleiter mit einem Hohlraum, in den von einer oder mehreren Lampen Licht eingestrahlt wird, und mindestens eine Lichtauskoppeleinrichtung zum Auskoppeln von Licht aus dem Hohllichtleiter zu einer Lichtaustrittsfläche aufweisen, wobei die Lichtauskoppeleinrichtung mindestens ein flächenförmiges lichtdurchlässiges Element mit einer Grenzfläche zwischen zwei Medien mit einem unterschiedlichen Brechungsindex aufweist, die mit einer lichtbrechenden Struktur versehen ist, welche auf sie einfallenden Licht gerichtet ablenkt und gemäß einer Ausführungsform in mindestens einer Ebene senkrecht zu der Lichtaustrittsfläche eine Lichtabstrahlung oberhalb eines Grenzwinkels im wesentlichen verhindern kann, so daß in dieser Ebene eine Abschirmung des an der Lichtaustrittsfläche austretenden Lichts herbeigeführt wird, wobei die Lichtauskoppelfläche, über welche Licht aus dem Hohllichtleiter ausgekoppelt wird, für zumindest zwei verschiedene Leuchten des Leuchtensystems verschieden ist, welches dadurch gekennzeichnet ist, daß zumindest für einen Teil der Leuchten des Systems die Lichtauskoppeleinrichtung mehrere nebeneinander angeordnete Elemente aufweist, die jeweils mit einer Licht gerichtet ablenkenden, insbesondere einer eine Abschirmung erzeugenden lichtbrechenden Struktur versehen sind, und die Lichtauskoppeleinrichtung jeder Leuchte vorzugsweise mindestens eine Einheit mit mindestens zwei miteinander verbundenen, übereinander angeordneten flächenförmigen Elementen aufweist, welche in eine Öffnung des Hohllichtleiters eingesetzt ist, so daß sie den Hohlraum des Hohllichtleiters begrenzt, wobei für alle Leuchten des Systems zumindest ein Element mit einer Licht gerichtet ablenkenden Struktur dieselbe Grundform und dieselbe Abmessung wie ein entsprechendes Element aller anderen Leuchten des Systems aufweist.

Insoweit vorangehend auf nebeneinander angeordnete Elemente Bezug genommen wird, ist damit gemeint, daß diese nicht übereinander angeordnet sind. Die nebeneinander liegenden Elemente können insbesondere dabei reihenartig, schachbrettartig oder ineinander liegend angeordnet sein. Sie können z. B. exzentrisch oder konzentrisch zueinander sein, wenn ein oder mehrere der Elemente einen Innenbereich aufweisen, in den ein anderes Element eingesetzt werden kann. Beispiele hierfür sind Kreis- oder Ellipsenringe, in die weitere Kreis- oder Ellipsenringe oder Kreis- oder Ellipsenscheiben eingesetzt werden können. Ebenso können auch mehreckige Ringformen vorgesehen sein. Dabei muß die innere Umfangslinie, welche den im Inneren ausgesparten Raum umschließt, nicht notwendigerweise konform zu der äußeren Umfangslinie sein. Beispielsweise kann in einem kreisscheibenförmigen Element eine viereckige Aussparung vorgesehen sein.

Die Erfindung kann insbesondere vorsehen, daß die vorangehend genannten strukturierten Elemente insgesamt oder jeweils für sich mit einer weiteren darüber oder darunter liegenden Platte verbunden sind. Insbesondere kann vorgesehen sein, daß alle derartigen nebeneinander angeordneten Elemente auf einer einzigen Trägerplatte angeordnet sind und das besagte Element, welches dieselbe Grundform und dieselbe Abmessung wie ein entsprechendes Element einer anderen Leuchte aufweist, ein auf dieser Trägerplatte montiertes Element ist. Wie vorangehend bereits erwähnt, umfaßt die besagte Einheit zumindest ein flächenförmiges Element, welches mit einer Licht gerichtet ablenkenden Struktur versehen ist.

Die Erfindung kann vorsehen, daß alle flächenförmigen Elemente, insbesondere Platten, mit einer eine Abschirmung erzeugenden lichtbrechenden Struktur einer Leuchte die gleiche Grundform und die gleichen Abmessungen wie Elemente mit einer lichtbrechenden Struktur einer anderen, insbesondere aller anderen Leuchten des Systems haben.

Es kann auch vorgesehen sein, daß die Platte oder Platten voneinander oder von dem Gehäuse des Hohllichtleiters zumindest für eine Leuchte des Systems durch mehrere Abstandselemente, insbesondere Rahmenelemente, getrennt sind, welche unterschiedliche Abmessungen aufweisen können.

Auf diese Weise ist es möglich, Differenzen zwischen der vorgegebenen Lichtauskoppelfläche bzw. Lichtaustrittsfläche und den durch die standardisierten Platten vorgegebenen Maße zu kompensieren. Beispielsweise kann, um diese Differenz zu überbrücken, ein Rahmenelement zwischen zwei Platten eingesetzt werden, welches dicker als andere Rahmenelemente ist.

Die Erfindung stellt auch ein Verfahren zum Herstellen einer Innenraumleuchte, insbesondere einer Pendel-, Einbau- oder Anbauleuchte, mit mindestens einem Hohllichtleiter, in den von einer oder mehreren Lampen Licht eingestrahlt wird, und mit mindestens einer Lichtauskoppeleinrichtung zum Auskoppeln von Licht aus dem Hohllichtleiter zu einer Lichtaustrittsfläche, wobei die Lichtauskoppeleinrichtung mindestens eine Grenzfläche zwischen zwei Medien mit einem unterschiedlichen Brechungsindex aufweist, die mit einer lichtbrechenden Struktur versehen ist, welche einfallendes Licht gerichtet ablenkt und gemäß einer Ausführungsform in mindestens einer Ebene senkrecht zu der Lichtaustrittsfläche eine Lichtabstrahlung oberhalb eines Grenzwinkels im wesentlichen verhindern kann, so daß in dieser Ebene eine Abschirmung des an der Lichtaustrittsfläche austretenden Lichts herbeigeführt wird, wobei die Lichtauskoppeleinrichtung eine Lichtauskoppelfläche, über der Licht aus dem Hohllichtleiter ausgekoppelt wird, eine vorgegebene Abmessung besitzt, zur Verfügung, welches durch die folgenden Schritte gekennzeichnet ist:

- Bereitstellen einer oder mehrerer lichtdurchlässiger flächenformiger Elemente mit einer Licht gerichtet ablenkenden lichtbrechenden Struktur an einer Grundfläche,

- Anordnen des oder der Elemente derart, daß eine vorgegebene Fläche, welche der Lichtauskoppelfläche entspricht, vollständig oder bis auf einen oder mehrere Bereiche ausgefüllt wird, deren Abmessungen kleiner als die Abmessungen der Platten sind, wobei neben oder zwischen den Platten Abstände zueinander oder zu dem Rand der vorgegebenen Fläche verbleiben können,

- vorzugsweise Verbinden einer oder mehrerer der Elemente mit einer darüber- oder darunterliegenden Platte zu einer Einheit oder zu mehreren Einheiten,

- Befestigen der Einheit oder der Einheiten in einer Öffnung des Gehäuses des Hohllichtleiters, derart, daß diese den Hohlraum des Hohllichtleiters begrenzen.

Die Erfindung kann vorsehen, daß ein oder mehrere Abstandselemente zwischen oder neben dem Element oder den Elementen eingefügt werden, wobei insbesondere vorgesehen sein kann, daß die vorgegebene Fläche durch das oder die Elemente und die Abstandselemente vollständig ausgefüllt wird. Insbesondere, wenn die Elemente auf einer Trägerplatte montiert werden, können jedoch auch freie Bereiche auf der Trägerplatte verbleiben, die gegebenenfalls durch eine entsprechende Behandlung kaschiert werden können.

Erfindungsgemäß kann vorgesehen sein, daß zumindest zwei der Abstandselemente unterschiedliche Abmessungen besitzen.

Durch die Verwendung von Abstandselementen mit unterschiedlichen Abmessungen können bei standardisierten Platten im wesentlichen beliebige Abmessungen der Lichtauskoppelfläche ausgefüllt werden.

Die Abstandselemente können insbesondere Rahmenelemente sein, welche mehrere Elemente zusammenhalten oder auch zum Abstützen eines einzigen Elementes an dem Gehäuse dienen können.

Es kann auch vorgesehen sein, daß zum Bilden der Lichtauskoppeleinrichtung mehrere Elemente, insbesondere Platten, mit einer Licht gerichtet ablenkenden lichtbrechenden Struktur nebeneinander angeordnet werden, von denen mindestens zwei, vorzugsweise alle, die gleiche Form und die gleichen Abmessungen aufweisen.

Die Erfindung geht in Abkehr von der bisherigen Praxis einer durchgehenden Platte zur Lichtauskopplung über der Lichtaustrittsöffnung des Hohllichtleiters ab und sieht statt dessen vor, die Lichtaustrittsöffnung mit Platten genormter Größe auszufüllen, wobei gegebenenfalls der verbleibende Freiraum durch Abstandselemente ausgefüllt oder durch eine transparente Trägerplatte abgedeckt wird. Dies hat zwar zur Folge, daß in den Bereichen dieses Freiraums keine Abschirmung erfolgt und/oder die Lichtaustrittsfläche nicht einheitlich aufgehellt erscheint. Ersteres ist jedoch bei Leuchten mit Abschirmung akzeptabel, wenn der Anteil des in den entsprechenden Bereichen ausgekoppelten Lichts oberhalb des Abschirmwinkels so klein ist, daß er nur wenig zu der mittleren Leuchtdichte der gesamten Lichtaustrittsfläche beiträgt und diese mittlere Leuchtdichte dementsprechend unter dem Grenzwert für die Abschirmung bleibt. Eine unterschiedliche Leuchtdichte über der Lichtaustrittsfläche kann gegebenenfalls in das Gesamtdesign der Leuchte integriert werden. Insbesondere bei Einbauleuchten kann beispielsweise die Größe der strukturierten Platten der Größe von Deckeneinheiten entsprechen, so daß sich die Unterbrechungen zwischen den Platten harmonisch in das Gesamtbild der Decke einfügen.

Weitere Merkmale und Vorteile der Erfindung ergeben sich aus der nachfolgenden detaillierten Beschreibung eines Ausführungsbeispiels anhand der beigefügten Zeichnungen.

Fig. 1    zeigt einen schematischen Querschnitt durch eine erfindungsgemäße Leuchte,

Fig. 2    zeigt schematisch eine Draufsicht auf die Trägerplatte mit den darauf montierten Prismenplatten,

Fig. 3    zeigt schematisch einen vergrößerten Ausschnitt aus einem Querschnitt der Prismenplatten entlang der Linie III-III in Fig. 2,

Fig. 4    zeigt schematisch einen vergrößerten Ausschnitt aus einem Querschnitt der Prismenplatten entlang der Linie IV-IV in Fig. 2,

Fig. 5    zeigt einen teilweisen Querschnitt entlang der Linie V-V in Fig. 2,

Fig. 6    zeigt schematisch einen schematischen Querschnitt entlang der Linie VI-VI in Fig. 2,

Fig. 7    zeigt eine teilweise Draufsicht einer zweiten Ausführungsform einer erfindungsgemäßen Leuchte,

Fig. 8    zeigt eine teilweise Draufsicht einer dritten Ausführungsform einer erfindungsgemäßen Leuchte von unten,

Fig. 9    zeigt eine teilweise Draufsicht einer vierten Ausführungsform einer erfindungsgemäßen Leuchte von unten

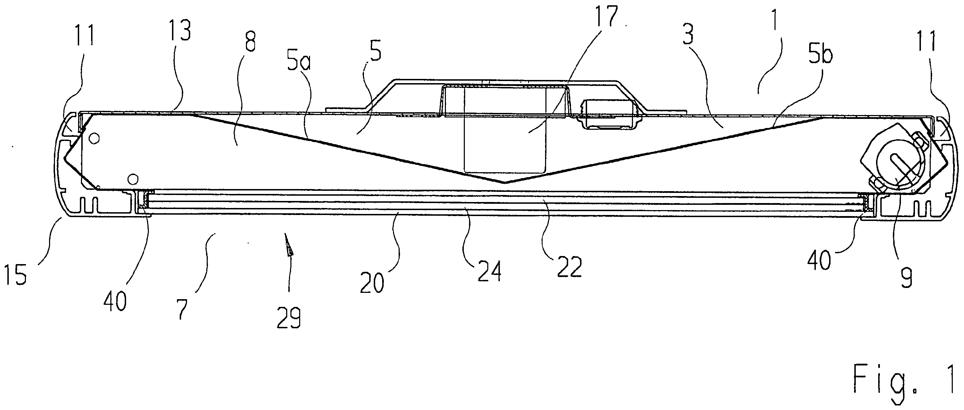

In Fig. 1 ist schematisch ein Beispiel einer Ausführungsform einer erfindungsgemäßen Leuchte dargestellt. Die Leuchte gemäß Fig. 1 weist ein allgemein mit 1 bezeichnetes Gehäuse auf, in dem ein allgemein mit 3 bezeichneter Hohllichtleiter angeordnet ist. Der Hohllichtleiter 3 besteht aus einer reflektierenden Dachwand 5 mit zwei in einem stumpfen Winkel zueinander geneigten Hälften 5a und 5b, reflektierenden Stirnwänden (nicht dargestellt) an den beiden Stirnseiten sowie einer Lichtauskoppeleinrichtung 7, die nachfolgend noch näher beschrieben wird. Die Stirnwände, die Dachwand 5 und die Lichtauskoppeleinrichtung 7 legen zusammen einen Hohlraum 8 mit reflektierenden Wänden fest.

Auf den beiden Schmalseiten ist der Hohllichtleiter 3 jeweils offen. An diese offenen Schmalseiten angrenzend ist jeweils eine Lampe 9 (nur auf einer Seite dargestellt) angeordnet, welche über einen Einkoppelreflektor 11 Licht in den Hohllichtleiter 3 einkoppelt.

Das Gehäuse 1 besteht aus einer oberen Gehäusehälfte 13, an welcher die Dachwand 5 befestigt ist, sowie einer den Hohllichtleiter und die Lichtauskoppeleinrichtung 7 von unten übergreifenden Seitenleiste 15, welche die Lichtauskoppeleinrichtung an dem Hohllichtleiter hält. An dem oberen Gehäuseteil 13 ist ein Vorschaltgerät 17 befestigt, welches sich in den Bereich oberhalb des Hohllichtleiters 3 erstreckt, in dem die beiden Dachhälften 5a und 5b einen verringerten Abstand zu der Lichtauskoppeleinrichtung 7 haben und dementsprechend oberhalb des Hohllichtleiters 3 einen vergrößerten Raumbereich in dem Gehäuse festlegen, so daß insgesamt eine relativ geringe Bauhöhe erreicht werden kann, was insbesondere bei Anbau- oder Pendelleuchten von Vorteil ist.

Die Lichtauskoppeleinrichtung besteht aus einer Trägerplatte 20, auf der zwei Paare von übereinander angeordneten quadratischen Prismenplatten 22 und 24 bzw. 26 und 28 angeordnet sind. Die Trägerplatte bildet die Lichtauskoppelfläche der Lichtauskoppeleinrichtung 7, die im Fall dieser Leuchte mit der Lichtaustrittsfläche 29 zusammenfällt. Die Prismenplatten sind auf einer Grundfläche mit einer Prismenstruktur versehen, welche eine Abschirmung des über die Lichtauskoppeleinrichtung austretenden Lichts erzeugt und welche nachfolgend für die Prismenplatten 22 und 24 genauer erläutert wird.

Die Prismenplatten 22 und 24 sind mit einer Struktur versehen, welche eine Lichtauskopplung oberhalb eines Grenzwinkels zu der Senkrechten zu der Lichtaustrittsfläche in bestimmten Ebenen im wesentlichen verhindert und dadurch eine Abschirmung, d.h. eine Absenkung der mittleren Leuchtdichte der Lichtaustrittsfläche unter einen Grenzwert, z.B. 200 cd/m², 500 cd/m² oder 1000 cd/m², erzeugt, wie er von den geltenden Normen bzw. Normvorschlägen für Bildschirmarbeitsplätze gefordert wird.

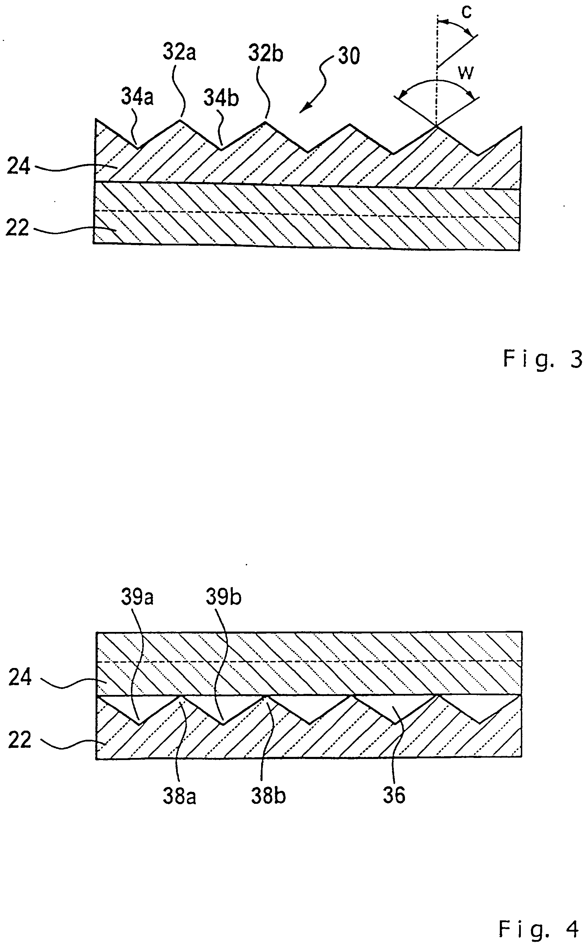

Die Prismenplatte 24 weist auf ihrer von dem Hohlraum 8 abgewandten Seite eine Struktur von parallelen Prismen 30 auf, die in einem Querschnitt senkrecht zu ihrer Längsachse eine dreieckige Form besitzen, wie man anhand von Fig. 3 erkennen kann. Fig. 3 zeigt, daß die Prismen unmittelbar aneinander angrenzen, gleichmäßig voneinander beabstandete Grate 32a, 32b, ... (nachfolgend kollektiv mit 32 bezeichnet) aufweisen und durch gleichmäßig voneinander beabstandete Vertiefungen 34a, 34b, ..., nachfolgend kollektiv mit 34 bezeichnet, voneinander getrennt sind. Die Vertiefungen 34 und die Grate 32 bilden auf der von dem Hohlraum 8 abgewandten Seite der Platte 24 gerade parallele Linien.

Die Abschirmung kann z.B. durch Totalreflexion in den Prismen erzeugt werden. Licht in den Prismen wird beim Einfall auf die Grenzfläche zu einem optisch dünneren Medium, z.B. Luft, vollständig in die Prismen zurückreflektiert, wenn der Einfallswinkel größer als der Winkel der Totalreflexion ist. Dementsprechend ist der Austrittswinkel, bezogen auf die Grenzflächen der Prismen, begrenzt. Die Seitenwände der Prismen zwischen den Graten 32 und den Vertiefungen 34 stehen jedoch schräg zu der Lichtaustrittsfläche, so daß die Begrenzung des Lichtaustrittswinkels durch den Grenzwinkel der Totalreflexion nicht notwendigerweise eine Abschirmung bedeutet. Ein mögliches Kriterium für eine Abschirmung läßt sich dadurch ableiten, daß für Strahlengänge in den Prismen bis zu einer vorgegebenen Höchstzahl k (z.B. k = 1, 2, 3 oder 4) von inneren Reflexionen in den Prismen vor einem Lichtaustritt aus der Struktur der Austrittswinkel bezüglich einer Senkrechten zu der Grundfläche der lichtbrechenden Struktur maximal gleich dem Abschirmwinkel ist. Andere Abschirmmechanismen oder Abschirmkriterien können alternativ oder ergänzend auch verwendet werden.

Es hat sich gezeigt, daß für Prismen mit einem Querschnitt in der Form eines gleichschenkligen Dreiecks eine gute Abschirmung erreicht wird, wenn zwischen dem Abschirmwinkel C und dem Prismenwinkel w für eine Grenzfläche zu Luft die folgenden Relationen bestehen:

$$w/2 \leq C \tag{1}$$

$$w \geq 2\,(2\,\arcsin(1/n) + 90)/3 \tag{2}$$

$$\tan(w/2) \leq (n\,\sin(\arcsin(1/n) - 3\,w/2) + \cos(w/2))\,/\,(n\,\cos(\arcsin(1/n) - 3\,w/2) + \sin(w/2)), \tag{3}$$

wobei n der Brechungsindex der Platte 24 ist.

Der Prismenwinkel w liegt bei den derzeitig bevorzugten Ausführungsformen für Leuchten mit Abschirmung bei einem Brechungsindex von 1,49 im Bereich von 90° bis 130°, besonders bevorzugt im Bereich von 110° bis 128°.

Anstelle der in Fig. 3 dargestellten dreieckförmigen Prismen können auch andere Prismenformen verwendet werden.

Die Prismenplatte 22 ist wie die Platte 24 mit einer Struktur von parallelen geradlinigen Prismen 36 versehen, welche Grate 38a, 38b, ... (nachfolgend kollektiv mit 38 bezeichnet) aufweisen und durch Vertiefungen 39a, 39b, ... (nachfolgend mit 39 bezeichnet) voneinander getrennt sind. Ebenso wie die Prismen 30 erzeugen die Prismen 36 in der Richtung quer zu ihrer Längsrichtung eine Abschirmung, wobei insbesondere die Relationen (1) bis (3) erfüllt sein können. Wie man anhand von Fig. 3 und 4 erkennt, ist die Längsrichtung der Prismen 30 senkrecht zu der Längsrichtung der Prismen 36. Die Prismenplatten 22 und 24 erzeugen daher zusammen eine Abschirmung in zueinander senkrechten Ebenen, die senkrecht auf der Lichtaustrittsfläche 3 stehen. Auf diese Weise wird eine Abschirmung in mindestens zwei Ebenen erzeugt. Der Abschirmwinkel C kann in diesen beiden Ebenen verschieden sein. Dementsprechend können die Prismen 30 und 36 auch einen verschiedenen Prismenwinkel w aufweisen. Der Vollständigkeit halber sei angemerkt, daß die dargestellten Prismen auch eine Abschirmung in Ebenen zwischen den beiden Ebenen senkrecht zu der jeweiligen Längsrichtung erzeugen können. Ähnliches kann auch für andere Prismenformen gelten.

Die Prismenplatten 26 und 28 haben denselben Aufbau wie die Prismenplatten 22 und 24 und sind in identischer Weise zueinander ausgerichtet. Die Prismen der Platte 22 liegen parallel zu denen der Platte 26 und diejenigen der Platte 24 parallel zu denjenigen der Platte 28.

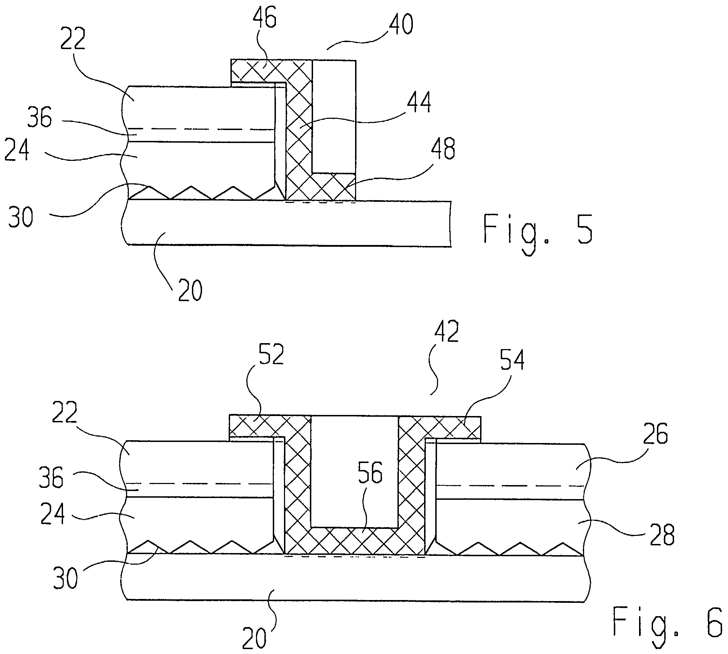

Die Prismenplatten 22 und 24 bzw. 26 und 28 sind durch Rahmenelemente 40 und 42 an der Trägerplatte 20 gehalten. Die Art der Verbindung ist in Fig. 5 und 6 im Detail dargestellt. An den äußeren Seiten ist zur Befestigung der Prismenplatten ein Rahmenelement 40 vorgesehen, welches einen zentralen Abschnitt 44 aufweist, an den sich an den beiden Enden Flansche 46 und 48 rechtwinklig anschließen, die in entgegengesetzte Richtungen weisen. Der Flansch 48 ist auf der Platte 20 aufgeklebt. Der Flansch 46 übergreift die Platten 22 und 24 (bzw. 26 und 28) und hält diese dadurch formschlüssig an der Trägerplatte 20.

Im Inneren der Lichtauskoppelfläche im Bereich zwischen den Paaren von Platten 22 und 24 bzw. 26 und 28 ein U-förmiges Rahmenelement 42 vorgesehen, welches an seinem offenen Ende auf einander gegenüberliegenden Seiten zwei rechtwinklig anschließende Flansche 52 und 54 aufweist, die sich in entgegengesetzte Richtungen erstrecken. Die Basisfläche 56 des Rahmenelements 42 ist an der Trägerplatte 20 festgeklebt, während die Flansche 52 und 54 die Platten 22 und 24 bzw. 26 und 28 übergreifen. Insgesamt bilden drei Rahmenelemente 40 zusammen mit dem zentralen Rahmenelement 42 einen Rahmen für die beiden Platten 22 und 24, welcher diese Platten formschlüssig an der Trägerplatte hält, und drei weitere Rahmenelemente 40 bilden zusammen mit dem Rahmenelement 42 einen Rahmen für die beiden Prismenplatten 26 und 28, der diese Prismenplatten an der Trägerplatte 20 hält. Insgesamt bilden die Trägerplatte 20, die Prismenplatten 22 bis 28 sowie die Rahmenelemente 40 und 42 eine vorgefertigte Einheit, welche in die Öffnung des Hohllichtleiters 3 eingesetzt und durch die Seitenleisten 15 an dem Hohllichtleiter gehalten wird. Die Platten und die zugehörigen Prismenstrukturen sind dabei durch die Rahmen 40 und 42 und die Fixierung an der Trägerplatte 20 korrekt zueinander ausgerichtet.

Statt einem Rahmenelement 42 können auch zwei Rahmenelemente 40 verwendet werden, welche mit den Flanschen 48 aneinander anstoßen. Gegebenenfalls können die Flansche 48 dieser Rahmenelemente 40 auch voneinander beabstandet sein.

Die Platten 22 bis 28 besitzen genau die gleichen Abmessungen. Um die Öffnung des Hohllichtleiters 3 vollständig auszufüllen, kann das Rahmenelement 42 so bemessen sein, daß seine Breite gleich der Differenz zwischen der Breite der Lichtaustrittsöffnung des Hohllichtleiters und dem Doppelten der Breite der Platten 22 bis 28 ist. Gemäß einem vorteilhaften Aspekt der Erfindung können also standardisierte Prismenplatten verwendet werden, wobei allfällige Differenzen in den Abmessungen der Platten zu den Vorgaben der Leuchte durch das Rahmenelement 42 und gegebenenfalls auch durch die Rahmenelemente 40 kompensiert werden.

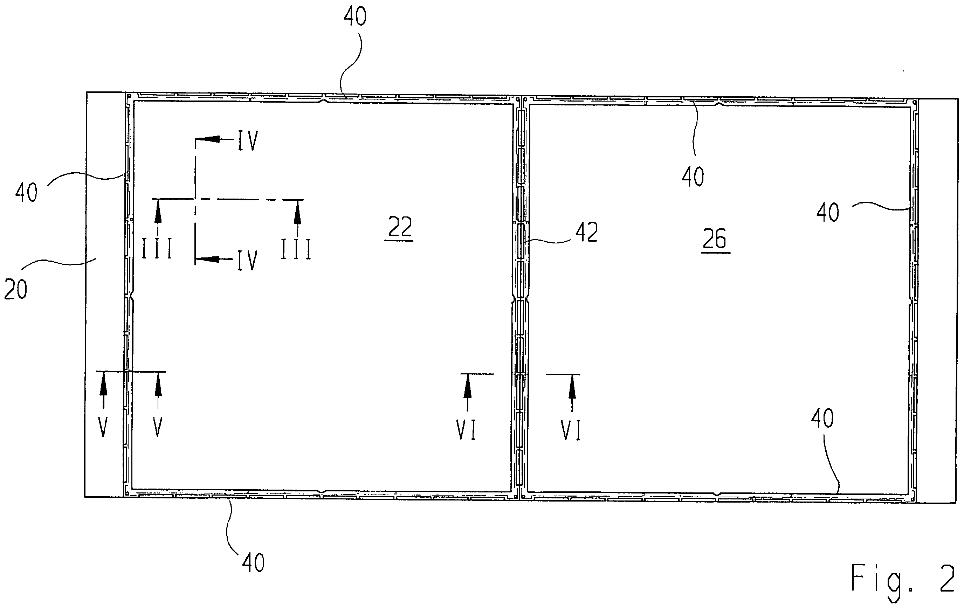

Bei der in Fig. 2 dargestellten Ausführungsform verbleiben an den Rändern der Trägerplatte jenseits der Rahmenelemente 40 freie Bereiche, die nicht von den Platten 22 bis 28 abgedeckt sind, wie dies in Fig. 2 am rechten und linken Rand erkennbar ist. Diese Bereiche liegen teilweise im Bereich der Öffnung des Hohllichtleiters. Zum Verhindern oder Unterdrücken eines Lichtaustritts in diesen Bereichen können diese durch Lackieren, Siebdruck oder Sandstrahlen behandelt sein, so daß sie das hindurchtretende Licht dämpfen, streuen oder vollständig absorbieren bzw. reflektieren.

Zur Herstellung der Lichtauskoppeleinrichtung 7 werden die Rahmenelemente 40 und 42 entsprechend der Geometrie der Fig. 2 mit den Flanschelementen 46 bzw. 52 und 54 nach unten ausgelegt und anschließend die Prismenplatten 22 und 24 bzw. 26 und 28 auf die Flansche 46, 52 und 54 aufgelegt, so daß die Rahmenelemente 40 und 42 die Prismenplatten im wesentlichen spielfrei halten. Anschließend wird die Trägerplatte 20 aufgelegt und mit den Flanschen 48 bzw. dem Basisabschnitt 56 verklebt. Man beachte, daß die Prismenstrukturen der Platten 22 bis 28 im Inneren der Lichtauskoppeleinrichtung 7 liegen. Genauer sind die Prismen der Platten 22 und 26 zu den Platten 24 und 28 hin ausgerichtet und die Prismen der Platten 24 und 28 zu der Trägerplatte 20. Auf diese Weise entsteht eine Einheit, welche auf beiden Seiten eine glatte, leicht zu reinigende Oberfläche aufweist und bei welcher die Prismenstrukturen durch die Rahmenelemente 40 und 42 sowie die Trägerplatte 20 abgeschlossen sind. Vorzugsweise wird der innere Bereich der Lichtauskoppeleinrichtung, in welchem die Prismenstrukturen vorhanden sind, dicht abgeschlossen, so daß Staub oder andere Verunreinigungen nicht in den Bereich der Prismenstrukturen vordringen können. Hierzu kann zwischen dem Flansch 46 bzw. den Flanschen 52 und 54 und der darunterliegenden Prismenplatte eine Dichtung (nicht dargestellt) vorgesehen sein, welche den Spalt zwischen dem Rahmen und den Prismenplatten abdichtet. Auf der gegenüberliegenden Seite ist die Einheit durch die Klebeverbindung mit der Trägerplatte 20 dicht verschlossen.

Das Licht von der Lampe 9 bzw. dem Einkoppelreflektor 11 fällt zu einem Teil direkt auf die Platten 22 und 26 ein. Ein Teil dieses Lichts tritt durch die Platten 22 und 24 bzw. 26 und 28 hindurch und an der Lichtaustrittsfläche 29 aus. Ein weiterer Teil des Lichts wird an den Platten 22 und 26 reflektiert. Die Dachwand 5 reflektiert das auf sie direkt von der Lampe 9 bzw. dem Einkoppelreflektor 11 einfallende Licht sowie das zu ihr von der Platte 22 bzw. 26 zurückreflektierte Licht nach unten zu der Lichtauskoppeleinrichtung 7.

Der Grad der Lichtauskopplung an der Prismenplatte 22 bzw. 26 hängt unter anderem von dem Einfallswinkel der einfallenden Lichtstrahlen ab. Es hat sich gezeigt, daß sich eine gleichmäßigere Lichtstärkeverteilungskurve der Leuchte erreichen läßt, wenn die reflektierende Dachwand zu der Lichtauskoppeleinrichtung geneigt ist und sich der Abstand zwischen der Lichtauskoppeleinrichtung und der Dachwand in Richtung weg von der Lampe verringert. Insbesondere wird dadurch die Lichtstärkeverteilungskurve im Bereich von 0° vergleichmäßigt und ein Minimum der Lichtstärkeverteilung in diesem Bereich vermieden oder abgeschwächt. Es hat sich weiterhin gezeigt, daß eine solche Gestaltung zu einer Verbesserung des Leuchtenwirkungsgrades führt. Daher besteht die Dachwand 5 aus zwei geraden, zueinander geneigten Abschnitten 5a und 5b, die so angeordnet sind, daß die Höhe des Hohlraums 8 in der Mitte am kleinsten und an dem radial äußeren Rand am größten ist.

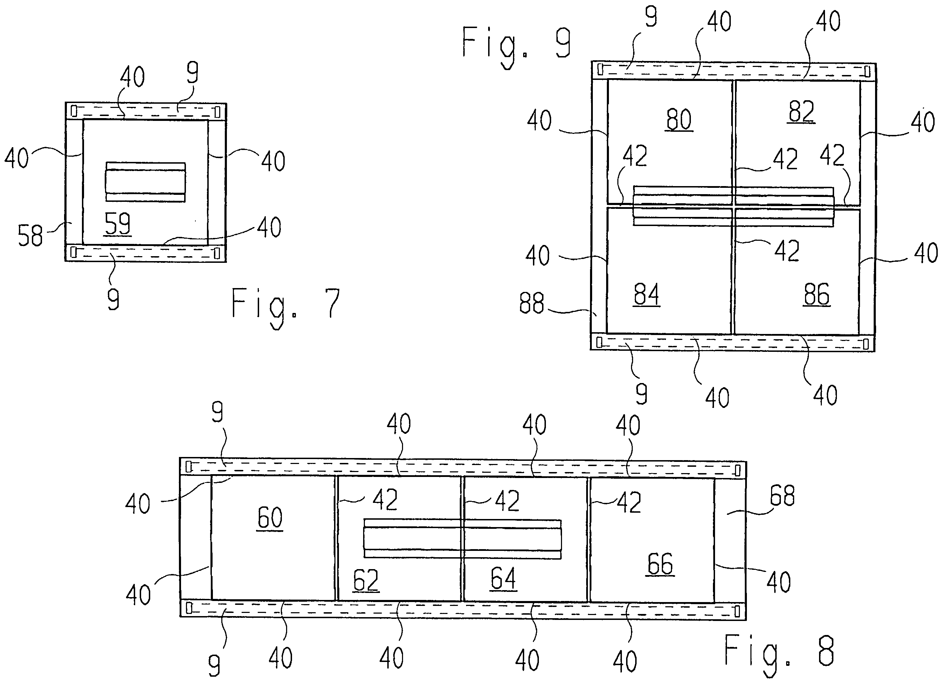

Fig. 7 bis 9 zeigen Abwandlungen der vorangehend beschriebenen Leuchte. Diese Leuchten haben den gleichen Aufbau wie die in Fig. 1 gezeigte Leuchte, der daher nicht noch einmal erläutert wird, und unterscheiden sich lediglich durch die Ausgestaltung der Lichtauskoppeleinrichtung 7. Gleiche Bestandteile sind mit den gleichen Bezugszeichen bezeichnet.

Bei der Ausführungsform gemäß Fig. 7 ist auf einer Trägerplatte 58 ein Paar von übereinanderliegenden Prismenplatten 59, von denen nur die obere Platte in Fig. 7 sichtbar ist, durch Rahmenelemente 40 gehalten, wie sie vorangehend mit Bezug auf Fig. 4 beschrieben wurden. Diese Ausführungsform ist für die Verwendung von relativ kurzen Leuchtstofflampen, etwa den standardmäßigen 8W-Leuchtstofflampen, vorgesehen.

Bei dem Ausführungsbeispiel gemäß Fig. 8 sind vier Paare von Prismenplatten 60, 62, 64 und 66 wie vorangehend mit Bezug auf Fig. 1 bis 6 beschrieben auf einer Trägerplatte 68 befestigt, wobei die äußeren Ränder der Prismenplatten durch die vorangehend beschriebenen Rahmenelemente 40 und die inneren Ränder der Prismenplatten durch die vorangehend beschriebenen Rahmenelemente 42 an der Trägerplatte 68 gehalten werden. Vorzugsweise sind die Rahmenelemente 40 und 42 mit der Trägerplatte 68 verklebt. Eine solche Ausführungsform könnte beispielsweise mit zwei standardmäßigen 21W-Leuchtstofflampen betrieben werden, die jeweils an einer offenen Schmalseite des Hohllichtleiters 3 angeordnet sind.

Fig. 9 zeigt eine Ausführungsform der Erfindung, bei welcher der Abstand zwischen den Lampen 9 vergrößert ist. Vier Paare von Prismenplatten 80, 82, 84 und 86, die wie die vorangehend beschriebenen Prismenplattenpaare 22 und 24 bzw. 26 und 28 ausgebildet sind, sind in der vorangehend beschriebenen Weise mit Rahmenelementen 40 bzw. 42 auf einer Trägerplatte 88 befestigt. Statt vier individuellen Rahmenelementen 42 kann auch ein kreuzförmiges Rahmenelement verwendet werden, dessen vier Arme im Querschnitt wie die Rahmenelemente 42 ausgebildet sind und welches die Funktion der vier Rahmenelemente 32 in einem Bauteil vereint. Diese Leuchte könnte beispielsweise mit zwei 24W-Leuchtstofflampen betrieben werden.

Gemäß einem besonderen Aspekt der Erfindung können verschiedene Ausführungsformen der Leuchte, beispielsweise die Ausführungsformen gemäß Fig. 1, 2 und 7 bis 9, Bestandteil eines Leuchtensystems sein, das Leuchten für verschieden dimensionierte und dementsprechend auch verschieden lange Leuchtstofflampen umfaßt, wobei sämtliche bei diesem System verwendeten Prismenplatten, also die Prismenplatten 22 und 28 und die Prismenplatten der Paare 52, 60 bis 66 und 80 bis 86, dieselben Abmessungen haben. Für verschiedene Leuchten des Systems werden zwei, drei, vier oder mehr Prismenplatten hintereinander in der Längsrichtung der Lampen (vgl. Fig. 2 und 8) und/oder in der Richtung quer zu der Längsrichtung der Lampen (vgl. Fig. 9) mit Hilfe von Rahmenelementen 40 und 42 auf einer Trägerplatte aneinandergesetzt und mit dieser verbunden, so daß eine zusammengesetzte Lichtaustrittsfläche entsteht.

Dies ist für eine rationale Fertigung mit hohen Stückzahlen von Vorteil, da die Prismenplatten nicht für jeden Leuchtentyp gesondert angefertigt werden müssen, sondern vielmehr ein standardisierter Plattentyp verwendet werden kann.

Die Erfindung ist auch auf andere als die genannten Leuchtenarten, z.B. Stehleuchten, anwendbar. Statt der dargestellten stabförmigen Lampen können auch andere Lichtquellen, z.B. Kompaktleuchtstofflampen oder Leuchtdioden, vorgesehen sein.

Die in der vorangehenden Beschreibung, den Ansprüchen und den Zeichnungen offenbarten Merkmale der Erfindung können sowohl einzeln als auch in beliebiger Kombination für die Verwirklichung der Erfindung in ihren verschiedenen Ausführungsformen wesentlich sein.

Bezugszeichenliste

| 1 | Gehäuse |
|---|---|
| 3 | Hohllichtleiter |
| 5 | Dachwand |
| 5a, 5b | Hälften der Dachwand |
| 7 | Lichtauskoppeleinrichtung |
| 8 | Hohlraum |
| 9 | Lampe |
| 11 | Einkoppelreflektor |
| 13 | obere Gehäusehälfte |
| 15 | Seitenleiste |
| 17 | Vorschaltgerät |
| 20 | Trägerplatte |
| 22 | Prismenplatte |
| 24 | Prismenplatte |

| 26 | Prismenplatte |
|---|---|
| 28 | Prismenplatte |
| 29 | Lichtaustrittsfläche |
| 30 | Prisma |
| 32, 32a, 32b | Prismengrat |
| 34, 34a, 34b | Vertiefung |
| 36 | Prisma |
| 38, 38a, 38b | Prismengrat |
| 39, 39a, 39b | Vertiefung |
| 40 | Rahmenelement |
| 42 | Rahmenelement |
| 44 | zentraler Abschnitt |
| 46 | Flansch |
| 48 | Flansch |
| 52 | Flansch |
| 54 | Flansch |
| 56 | Basisfläche |
| 58 | Trägerplatte |
| 59 | Prismenplattenpaar |
| 60 | Prismenplattenpaar |
| 62 | Prismenplattenpaar |
| 64 | Prismenplattenpaar |
| 66 | Prismenplattenpaar |
| 68 | Trägerplatte |
| 80 | Prismenplattenpaar |
| 82 | Prismenplattenpaar |
| 84 | Prismenplattenpaar |
| 86 | Prismenplattenpaar |
| 88 | Trägerplatte |

## Patentansprüche

1. Leuchte, insbesondere Einbau-, Anbau- oder Pendelleuchte, mit mindestens einem Hohllichtleiter (3), in den von einer oder mehreren Lampen (9) Licht eingestrahlt wird, und mit mindestens einer Lichtauskoppeleinrichtung (7) zum Auskoppeln von Licht aus dem Hohllichtleiter (3) zu einer Lichtaustrittsfläche (29), wobei die Lichtauskoppeleinrichtung (7) mindestens eine Grenzfläche zwischen zwei Medien mit einem unterschiedlichen Brechungsindex aufweist, die mit einer lichtbrechenden Struktur (30, 36) versehen ist, welche in mindestens einer Ebene senkrecht zu der Lichtaustrittsfläche (29) Licht gerichtet ablenkt, so daß dadurch die Lichtstärkeverteilungskurve an der Lichtaustrittsfläche beeinflußt wird, **dadurch gekennzeichnet, daß** die Lichtauskoppeleinrichtung (7) mindestens eine im wesentlichen formstabile Einheit mit mindestens zwei miteinander verbundenen, übereinander angeordneten flächenförmigen Elementen aufweist (20, 22, 24, 26, 28; 58, 59; 60, 62, 64, 66, 68; 80, 82, 84, 86, 88), wobei diese Einheit in eine Öffnung des Gehäuses des Hohllichtleiters eingesetzt ist, so daß sie den Hohlraum des Hohllichtleiters begrenzt.

2. Leuchte nach Anspruch 1, **dadurch gekennzeichnet, daß** die lichtbrechende Struktur (30, 36) in mindestens einer Ebene senkrecht zu der Lichtaustrittsfläche (29) eine Lichtabstrahlung oberhalb eines Grenzwinkels (C) im wesentlichen verhindert, derart, daß in dieser Ebene eine Abschirmung des an der Lichtaustrittsfläche (29) austretenden Lichts herbeigeführt wird.

3. Leuchte nach Anspruch 1 oder 2, **dadurch gekennzeichnet, daß** die Lichtauskoppeleinrichtung mehrere nebeneinander angeordnete flächenförmige Elemente (22, 24, 26, 28) aufweist, die jeweils mit einer Licht gerichtet ablenkenden lichtbrechenden Struktur (30, 36) auf einer Grundfläche versehen sind.

4. Leuchte nach einem der Ansprüche 1 bis 3, **dadurch gekennzeichnet, daß** die Lichtauskoppeleinrichtung mindestens einen Stapel (22, 24, 26, 28; 59; 60, 62, 64, 66; 80, 82, 84, 86) von mindestens zwei flächenförmigen Elementen aufweist, die jeweils mit einer lichtbrechenden Struktur zur Erzeugung einer Abschirmung versehen sind, wobei die lichtbrechende Struktur eines ersten Elements (22, 26) in einer ersten Ebene senkrecht zu der Lichtaustrittsfläche die Lichtauskopplung oberhalb eines Grenzwinkels zu der Senkrechten zu der Lichtaustrittsfläche im wesentlichen verhindert, in der die lichtbrechende Struktur eines zweiten Elements (24, 28) die Lichtabstrahlung nicht oder nur oberhalb eines größeren Grenzwinkels im wesentlichen verhindert, und die lichtbrechende Struktur des zweiten Elements (24, 28) in einer zweiten Ebene senkrecht zu der Lichtaustrittsfläche eine Lichtabstrahlung oberhalb eines Grenzwinkels zu einer Senkrechten zu der Lichtaustrittsfläche im wesentlichen verhindert, in welcher das erste Element (22, 26) die Lichtauskopplung nicht oder nur oberhalb eines größeren Grenzwinkels im wesentlichen verhindert.

5.  Leuchte nach einem der Ansprüche 1 bis 4, **dadurch gekennzeichnet, daß** in zwei übereinander angeordneten flächenförmigen Elementen (22, 24, 26, 28) jeweils eine lichtbrechende Struktur (30, 36) mit linienförmigen Strukturelementen ausgebildet ist, wobei die Linien, welche die Geometrie der Struktur der ersten Platte definieren, mit den Linien, welche die Geometrie der Struktur der zweiten Platte definieren, einen nicht verschwindenden Winkel einschließen.

6.  Leuchte nach einem der Ansprüche 1 bis 5, **dadurch gekennzeichnet, daß** eines von zwei oder mehr übereinander liegenden flächenförmigen Elementen einen mit einer lichtbrechenden Struktur versehenen Bereich und einen an diesen strukturierten Bereich anschließenden Verbindungsbereich mit einer glatten Oberfläche aufweist, wobei dieses Element mit einem weiteren Element oder einem Halteelement zum Halten eines weiteren Elements in diesem Verbindungsbereich verbunden ist.

7.  Leuchte nach einem der Ansprüche 1 bis 6, **dadurch gekennzeichnet, daß** zumindest eines von mehreren übereinanderliegenden flächenförmigen Elementen (24, 28) zumindest abschnittsweise von einem oder mehreren Rahmenelementen (40, 42), welche dieses und gegebenenfalls weitere Elemente übergreifen, an einem anderen flächenförmigen Element (20) gehalten wird.

8.  Leuchte nach einem der Ansprüche 1 bis 7, **dadurch gekennzeichnet, daß** die Einheit durch flächenförmige Elemente gebildet wird, welche jeweils eine lichtbrechende Struktur zur Erzeugung einer Abschirmung aufweisen.

9.  Leuchte nach einem der Ansprüche 1 bis 7, **dadurch gekennzeichnet, daß** auf einer Trägerplatte (20) mindestens zwei flächenförmige Elemente (22, 24, 26, 28) mit einer eine Licht gerichtet ablenkenden lichtbrechenden Struktur nebeneinander angeordnet und mit der Trägerplatte verbunden sind.

10. Leuchte nach Anspruch 9, **dadurch gekennzeichnet, daß** die mit einer Licht gerichtet ablenkenden lichtbrechenden Struktur versehenen Elemente (22, 24, 26, 28) durch mindestens ein mit der Trägerplatte (20) verbundenes Rahmenelement (40, 42) an dieser gehalten werden, welches eines oder mehrere der Elemente mit einer lichtbrechenden Struktur übergreift.

11. Leuchte nach einem der Ansprüche 1 bis 10, **dadurch gekennzeichnet, daß** die Einheit eine im wesentlichen glatte Grundfläche auf ihren Außenseiten aufweist und die die Abschirmung erzeugende strukturierte Grenzfläche oder Grenzflächen im Inneren der Einheit liegen.

12. Leuchte nach Anspruch 11, **dadurch gekennzeichnet, daß** die Elemente einer Einheit in einer Weise verbunden sind, daß der Bereich der strukturierten Grenzfläche oder Grenzflächen im Inneren der Einheit dicht abgeschlossen ist.

13. Leuchte nach einem der Ansprüche 2 bis 9, **dadurch gekennzeichnet, daß** zumindest zwei nebeneinander angeordnete strukturierte flächenförmige Elemente (22, 26, 24, 28) dieselbe Form und dieselbe Grundfläche aufweisen.

14. Leuchtensystem, bestehend aus mehreren Leuchten nach einem der Ansprüche 1 bis 13, insbesondere Einbau-, Anbau- und/oder Pendelleuchten, wobei die Lichtauskoppelfläche (29), über welche Licht aus dem Hohllichtleiter (3) ausgekoppelt wird, für zumindest zwei verschiedene Leuchten des Leuchtensystems verschieden ist und zumindest für einen Teil der Leuchten des Systems die Lichtauskoppeleinrichtung mehrere nebeneinander angeordnete lichtdurchlässige flächenförmige Elemente (22, 24, 26, 28) aufweist, die jeweils mit einer Licht gerichtet ablenkenden lichtbrechenden Struktur (30, 36) versehen sind, wobei für alle Leuchten des Systems zumindest einlichtdurchlässiges flächenformiges Element (22, 24, 26, 28) mit einer Licht gerichtet ablenkenden Struktur dieselbe Grundform und dieselbe Abmessung wie ein entsprechendes Element aller anderen Leuchten des Systems aufweist.

15. Leuchtensystem nach Anspruch 14, **dadurch gekennzeichnet, daß** alle flächenförmigen Elemente (22, 24, 26, 28) mit einer Licht gerichtet ablenkenden lichtbrechenden Struktur einer Leuchte die gleiche Grundform und die gleichen Abmessungen wie Elemente mit einer lichtbrechenden Struktur einer anderen Leuchte des Systems haben.

16. Leuchtensystem nach Anspruch 14 oder 15, **dadurch gekennzeichnet, daß** das oder die flächenförmigen Elemente (22, 24, 26, 28) voneinander oder von dem Gehäuse des Hohllichtleiters (3) zumindest für eine Leuchte des Systems durch mehrere Abstandselemente (40,42) getrennt sind.

17. Leuchtensystem nach einem der Ansprüche 14 bis 16, **dadurch gekennzeichnet, daß** ein flächenförmiges Element durch einen umlaufenden Rahmen an einer Trägerplatte gehalten ist.

18. Verfahren zum Herstellen einer Innenraumleuchte nach einem der Ansprüche 1 bis 13, insbesondere einer Einbau-, Anbau- oder Pendelleuchte, mit mindestens einem Hohllichtleiter (3), in den von einer oder mehreren Lampen (9) Licht eingestrahlt wird, und mit mindestens einer Lichtauskoppeleinrichtung (7) zum Auskoppeln von Licht aus dem Hohllichtleiter (3) zu einer Lichtaustrittsfläche (29), wobei die Lichtauskoppeleinrichtung (7) mindestens eine Grenzfläche zwischen zwei Medien mit einem unterschiedlichen Brechungsindex aufweist, die mit einer Licht gerichtet ablenkenden lichtbrechenden Struktur (30, 36) versehen ist, welche in mindestens einer Ebene senkrecht zu der Lichtaustrittsfläche (29) die Lichtstärkeverteilungskurve an der Lichtaustrittsfläche beeinflußt, wobei die Lichtauskoppeleinrichtung (7) eine Lichtauskoppelfläche, über der Licht aus dem Hohllichtleiter ausgekoppelt wird, mit einer vorgegebenen Abmessung besitzt, **gekennzeichnet durch** die folgenden Schritte:

  - Bereitstellen eines oder mehrerer lichtdurchlässiger flächenförmiger Elemente (22, 24, 26, 28) mit einer Licht gerichtet ablenkenden lichtbrechenden Struktur (30,36) an einer Grundfläche,
  - Anordnen des oder der flächenförmigen Elemente (22, 24, 26, 28) derart, daß eine vorgegebene Fläche, welche der Lichtauskoppelfläche (29) entspricht, vollständig oder bis auf einen oder mehrere Bereiche ausgefüllt wird, dessen Abmessungen kleiner als die Abmessungen der Elemente sind,
  - Verbinden zumindest eines Teils der Elemente (22, 24, 26, 28) mit einer oder mehreren darüber oder darunter liegenden Platten (20) zu einer oder mehreren Einheiten,
  - Befestigen der Einheit oder Einheiten in einer Öffnung des Gehäuses des Hohllichtleiters (3), derart, daß diese den Hohlraum (8) des Hohllichtleiters (3) begrenzen.

19. Verfahren nach Anspruch 18, **dadurch gekennzeichnet, daß** zwischen oder neben den flächenförmigen Elementen (22, 24, 26, 28) zwei oder mehr Abstandselemente (40, 42) eingefügt werden, wobei zumindest zwei der Abstandselemente (40, 42) unterschiedliche Abmessungen besitzen.

20. Verfahren nach Anspruch 18 oder 19, **dadurch gekennzeichnet, daß** zum Bilden der Lichtauskoppeleinrichtung mehrere flächenförmige Elemente (22, 24, 26, 28) mit einer Licht gerichtet ablenkenden lichtbrechenden Struktur nebeneinander angeordnet werden, von denen mindestens zwei (22, 26, 24, 28) die gleiche Form und die gleichen Abmessungen aufweisen.

21. Verfahren nach einem der Ansprüche 18 bis 20, **dadurch gekennzeichnet, daß** ein oder mehrere flächenförmige Elemente durch einen umlaufenden Rahmen mit einer darüberliegenden oder darunterliegenden Platte verbunden werden.

**Claims**

1. Light, in particular a flush-fitted, surface-mounted, or suspended light, with at least one hollow light conductor (3) into which light is beamed from one or a plurality of lamps (9), and with at least one light coupling device (7) for coupling out light from the hollow light conductor (3) to a light output surface (29), wherein the light coupling device (7) comprises at least one boundary surface between two media with different refractive indices, which is provided with a light-refracting structure (30, 36), which deflects light in a directed manner in at least one plane perpendicular to the light output surface (29), such that the light intensity distribution curve at the light output surface is influenced, **characterized in that** the light coupling device (7) comprises at least one essentially form-stable unit with at least two mutually connected flat elements arranged above one another (20, 22, 24, 26, 28; 58, 59; 60, 62, 64, 66; 80, 82, 84, 86, 88), wherein this unit is inserted into an opening of the housing of the hollow light conductor, such that it delimits the hollow space of the hollow light conductor.

2. Light according to claim 1, **characterized in that** the light refractive structure (30, 36) essentially prevents a light emission above a limit angle (C) in at least one plane perpendicular to the light output surface (29), in such a way that in this plane a screening is induced of the light emerging at the light output surface (29).

3.  Light according to claim 1 or 2, **characterized in that** the light coupling device comprises a plurality of flat elements (22, 24, 26, 28) arranged next to one another, which in each case are provided with a light-refractive structure (30, 36) on a base surface, which deflects light in a directed manner.

4.  Light according to any one of claims 1 to 3, **characterized in that** the light coupling device comprises at least one stack (22, 24, 26, 28; 59; 60, 62, 64, 66; 80, 82, 84, 86) of at least two flat elements, which in each case are provided with a light-refractive structure for producing a screening effect, wherein the light-refractive structure of a first element (22, 26), in a first plane perpendicular to the light output surface, essentially prevents the light coupling above a limiting angle to the perpendicular to the light output surface, in which the light-refractive structure of a second element (24, 28) essentially does not prevent the light emission, or only above a larger limit angle, and the light-refractive structure of the second element (24, 28), in a second plane perpendicular to the light output surface, essentially prevents a light emission above a limiting angle to the perpendicular to the light output surface, in which the first element (22, 26) essentially does not prevent the light coupling, or only above a greater limiting angle.

5.  Light according to any one of claims 1 to 4, **characterized in that**, formed in two flat elements (22, 24, 26, 28) arranged above one another, is in each case a light-refractive structure (30, 36) with structure elements in the form of lines, wherein the lines which define the geometry of the structure of the first plate enclose a non-vanishing angle with the lines which define the geometry of the structure of the second plate.

6.  Light according to any one of claims 1 to 5, **characterized in that** one of the two or more flat elements located above one another comprise a region provided with a light-refractive structure and a connection region with a smooth surface, connecting to this structured region, wherein this element is connected to a further element or to a holding element for holding a further element in this connection region.

7.  Light according to any one of claims 1 to 6, **characterized in that** at least one of a plurality of flat elements (24, 28) located above one another is held at least in sections to another flat element (20) by means of one or more frame elements (40, 42), which engage over this, and over further elements if applicable.

8.  Light according to any one of claims 1 to 7, **characterized in that** the unit is formed by flat elements, which in each case comprise a light-refractive structure for forming a screening effect.

9.  Light according to any one of claims 1 to 7, **characterized in that** at least two flat elements (22, 24, 26, 28) having a refractive structure that directionally deviates light are arranged next to one other on a carrier plate (20) and are connected with the carrier plate.

10. Light according to claim 9, **characterized in that** the elements (22, 24, 26, 28), provided with a light-refractive structure which deflects light in a directed manner, are held on the carrier plate (20) by a frame (40, 42), connected to the plate, which engages over one or more of the elements with a light-refractive structure.

11. Light according to any one of claims 1 to 10, **characterized in that** the unit comprises an essentially smooth base surface on its outsides, and the structured boundary surface or boundary surfaces producing the screening are located in the interior of the unit.

12. Light according to claim 11, **characterized in that** the elements of a unit are connected in such a way that the region of the structured boundary surface or boundary surfaces are enclosed in a sealed manner in the interior of the unit.

13. Light according to any one of claims 2 to 9, **characterized in that** at least two structured flat elements (22, 26, 24, 28) arranged next to one another exhibit the same shape and the same base surface area.

14. Light system, consisting of a plurality of lights according to any one of claims 1 to 13, in particular flush-fitted, surface-mounted, or suspended lights, wherein the light coupling surface (29), by means of which light is coupled out of the hollow light conductor (3), is different for at least two different lights of the light system, and comprises, at least for a part of the lights of the light system, the light coupling device comprises a plurality of light-permeable flat elements (22, 24, 26, 28) arranged next to one another, which in each case are provided with a light-refractive structure (30, 36) which deflects light in a directed manner, wherein, for all the lights of the system, at least one light-permeable flat element (22, 24, 26, 28), with a structure which deflects light in a directed manner, exhibits the same basic shape and the same dimensions as a corresponding element of all the other lights of the system.

15. Light system according to claim 14, **characterized in that** all flat elements (22, 24, 26, 28) with a light-refracting structure of a light, deflecting light in a directed manner, have the same basic shape and the same dimensions as elements with a light-refracting structure of other lights of the system.

16. Light system according to claim 14 or 15, **characterized in that** the flat element(s) (22, 24, 26, 28) are separated from one another or from the housing of the hollow light conductor (3) at least for one light of the system by a plurality of spacer elements (40, 42).

17. Light system according to one of claims 14 to 16, **characterized in that** a flat element is held by a circumferential frame on a carrier plate.

18. Method for producing an interior light according to any one of claims 1 to 13, in particular a flush-fitted, surface-mounted, or suspended light, with at least one hollow light conductor (3), into which light is irradiated by one or a plurality of lamps (9), and with at least one light coupling device (7) for coupling light out of the hollow light conductor (3) to a light emergence surface (29), wherein the light coupling device (7) comprises at least one boundary surface between two media with different refractive indexes, which is provided with a structure (30, 36) deflecting light in a directed manner, which in at least one plane perpendicular to the light emergence surface (29) influences the light strength distribution curve at the light emergence surface, wherein the light coupling device (7) has a light coupling surface by which the light is coupled out of the hollow light conductor, with a specified dimension, **characterized by** the following steps:

- Providing one or a plurality of light-permeable flat elements (22, 24, 26, 28) with a light-refractive structure (30, 36) on a base surface, deflecting light in a directed manner,
- arranging of the flat element(s) (22, 24, 26, 28) in such a way that a specified surface which corresponds to the light coupling surface (29) is filled completely or up to one or more regions, the dimensions of which are smaller than the dimensions of the elements,
- connecting at least one part of the elements (22, 24, 26, 28) with one or more plates (20) located above or below it, to one or more units,
- securing the unit or units in an opening of the housing of the hollow light conductor (3) in such a way that these delimit the cavity (8) of the hollow light conductor (3).

19. Method according to claim 18, **characterized in that** two or more spacer elements (40, 42) are inserted between or next to the flat elements (22, 24, 26, 28), wherein at least two of the spacer elements (40, 42) have different dimensions.

20. Method according to claim 18 or 19, **characterized in that**, in order to form the light coupling device, a plurality of flat elements (22, 24, 26, 28) are arranged next to one another, with a light-refracting structure deflecting light in a directed manner, of which at least two (22, 26, 24, 28) exhibit the same shape and the same dimensions.

21. Method according to one of claims 18 to 20, **characterized in that** one or more flat elements are connected by a circumferential frame to a plate located above or below them.

## Revendications

1. Luminaire, plus particulièrement luminaire encastré, luminaire en applique ou luminaire suspendu, avec au moins un guide de lumière creux (3), dans lequel de la lumière est introduite par une ou plusieurs lampes (9) et avec au moins un dispositif de découplage de lumière (7) pour le découplage de la lumière provenant du guide de lumière creux (3) vers une surface de sortie de lumière (29), le dispositif de découplage de lumière (7) comprenant au moins une surface limite entre deux milieux avec des indices de réfraction différents, qui est munie d'une structure réfringente (30, 36), qui dévie de manière orientée la lumière dans au moins un plan perpendiculaire à la surface de sortie de lumière (29), de façon à ce que la courbe de distribution d'intensité de lumière sur la surface de sortie de lumière soit influencée, **caractérisé en ce que** le dispositif de découplage de lumière (7) comprend au moins une unité globalement rigide avec au moins deux éléments plats (20, 22, 24, 26, 28 ; 58, 59 ; 60, 62, 64, 66, 68 ; 80, 82, 84, 86, 88) superposés et reliés entre eux, cette unité étant insérée dans une ouverture du boîtier du guide de lumière creux de façon à ce qu'elle limite l'espace creux du guide de lumière creux.

2. Luminaire selon la revendication 1, **caractérisé en ce que** la structure réfringente (30, 36) empêche globalement, dans au moins un plan perpendiculaire à la surface de sortie de lumière (29), une émission de lumière au-dessus d'un angle limite (C), de façon à ce que, dans ce plan, la lumière sortant au niveau de la surface de sortie de lumière (29) soit protégée.

3. Luminaire selon la revendication 1 ou 2, **caractérisé en ce que** le dispositif de découplage de lumière comprend plusieurs éléments plats (20, 22, 24, 26, 28) juxtaposés qui sont munis chacun, sur une surface de base, d'une structure réfringente (30, 36) déviant la lumière de manière orientée.

4. Luminaire selon l'une des revendications 1 à 3, **caractérisé en ce que** le dispositif de découplage de lumière comprend au moins un empilement (22, 24, 26, 28 ; 59 ; 60, 62, 64, 66 ; 80, 82, 84, 86) d'au moins deux éléments plats, qui sont munis chacun d'une structure réfringente pour permettre une protection, la structure réfringente d'un premier élément (22, 26) empêchant globalement, dans un premier plan perpendiculaire à la surface de sortie de lumière, le découplage de lumière au-dessus d'un angle limite par rapport à la perpendiculaire à la surface de sortie de lumière, dans laquelle la structure réfringente d'un deuxième élément (24, 28) n'empêche globalement pas une émission de lumière ou seulement au-dessus d'un angle limite supérieur, et la structure réfringente du deuxième élément (24, 28) empêchant globalement, dans un deuxième plan perpendiculaire à la surface de sortie de lumière, une émission de lumière au-dessus d'un angle limite par rapport à une perpendiculaire à la surface de sortie de lumière, dans laquelle le premier élément (22, 26) n'empêche globalement pas le découplage de lumière ou seulement au-dessus d'un angle limite supérieur.

5. Luminaire selon l'une des revendications 1 à 4, **caractérisé en ce que**, dans chacun de deux éléments plats (22, 24, 26, 28) superposés, se trouve une structure réfringente (30, 36) avec des éléments structurels linéaires, les lignes qui définissent la géométrie de la structure de la première plaque, formant, avec les lignes qui définissent la géométrie de la structure de la deuxième plaque, un angle non nul.

6. Luminaire selon l'une des revendications 1 à 5, **caractérisé en ce qu'**un des deux éléments plats superposés ou plus comprend une zone munie d'une structure réfringente et une zone de liaison, prolongeant cette zone structurée, avec une surface lisse, cet élément étant relié avec un autre élément ou un élément de maintien pour le maintien d'un autre élément dans cette zone de liaison.

7. Luminaire selon l'une des revendications 1 à 6, **caractérisé en ce qu'**au moins un parmi plusieurs éléments plats (24, 28) sont maintenus au moins sur certaines portions par un ou plusieurs éléments de cadres (40, 42) qui recouvrent cet élément et, le cas échéant, d'autres éléments, au niveau d'un autre élément plat (20).

8. Luminaire selon l'une des revendications 1 à 7, **caractérisé en ce que** l'unité est constituée d'éléments plats qui présentent chacun une structure réfringente afin de permettre une protection.

9. Luminaire selon l'une des revendications 1 à 7, **caractérisé en ce que**, sur une plaque de support (20) sont juxtaposés au moins deux éléments plats (22, 24, 26, 28) avec une structure réfringente déviant la lumière de manière orientée, qui sont reliés avec la plaque de support.

10. Luminaire selon la revendication 9, **caractérisé en ce que** les éléments (22, 24, 26, 28) munis d'une structure réfringente déviant la lumière de manière orientée sont maintenus, à l'aide d'au moins un élément de cadre (40, 42) relié à la plaque de support (20), sur celle-ci, qui recouvre un ou plusieurs des éléments avec une structure réfringente.

11. Luminaire selon l'une des revendications 1 à 10, **caractérisé en ce que** l'unité comprend une surface de base globalement lisse sur ses côtés extérieurs et la surface limite ou les surfaces limites structurées permettant la protection se trouvent à l'intérieur de l'unité.

12. Luminaire selon la revendication 11, **caractérisé en ce que** les éléments d'une unité sont reliés de façon à ce que la zone de la surface limite ou des surfaces limites structurées est scellée de manière étanche à l'intérieur de l'unité.

13. Luminaire selon l'une des revendications 2 à 9, **caractérisé en ce qu'**au moins deux éléments plats structurés (22, 26, 24, 28) juxtaposés présentent la même forme et la même surface de base.

**14.** Système de luminaire constitué de plusieurs luminaires selon l'une des revendications 1 à 13, plus particulièrement des luminaires encastrés, des luminaires en appliques et/ou des luminaires suspendus, la surface de découplage de lumière (29), par l'intermédiaire de laquelle la lumière est découplée hors du guide de lumière creux (3), étant différente pour au moins deux luminaires différents du système de luminaire et, au moins pour une partie des luminaires du système, le dispositif de découplage de lumière comprenant plusieurs éléments plats (22, 24, 26, 28) transparents juxtaposés, qui sont munis chacun d'une structure réfringente (30, 36) déviant la lumière de manière orientée, moyennant quoi, pour tous les luminaires du système, au moins un élément plat (22, 24, 26, 28) transparent avec une structure déviant la lumière de manière orientée présente la même forme de base et les mêmes dimensions qu'un élément correspondant de tous les autres luminaires du système.

**15.** Système de luminaire selon la revendication 14, **caractérisé en ce que** tous les éléments plats (22, 24, 26, 28) d'un luminaire, avec une structure réfringente déviant la lumière de manière orientée, présente la même forme de base et les mêmes dimensions que des éléments avec une structure réfringente d'un autre luminaire du système.

**16.** Système de luminaire selon la revendication 14 ou 15, **caractérisé en ce que** le ou les éléments plats (22, 24, 26, 28) sont séparés les uns des autres ou du boîtier du guide de lumière creux (3) au moins pour un luminaire du système par plusieurs entretoises (40, 42).

**17.** Système de luminaire selon l'une des revendications 14 à 16, **caractérisé en ce qu'**un élément plat est maintenu par un cadre circulaire sur une plaque de support.

**18.** Procédé de fabrication d'un luminaire intérieur selon l'une des revendications 1 à 13, plus particulièrement d'un luminaire encastré, d'un luminaire en applique ou d'un luminaire suspendu, avec au moins un guide de lumière creux (3), dans lequel est introduite une lumière provenant d'une ou plusieurs lampes (9), et avec au moins un dispositif de découplage de lumière (7) pour le découplage de la lumière hors du guide de lumière creux (3) vers une surface de sortie de lumière (29), le dispositif de découplage de lumière (7) comprenant au moins une surface limite entre deux milieux avec des indices de réfraction différents, qui est munie d'une structure réfringente (30, 36) déviant la lumière de manière orientée, qui influence, dans au moins un plan perpendiculaire à la surface de sortie de lumière (29), la courbe de distribution d'intensité lumineuse au niveau de la surface de sortie de lumière, le dispositif de découplage de lumière (7) présentant une surface de découplage de lumière par l'intermédiaire de laquelle la lumière provenant du guide de lumière creux est découplée, avec des dimensions prédéterminées, **caractérisé par** les étapes suivantes :

- réalisation d'un ou plusieurs éléments plats (22, 24, 26, 28) transparents avec une structure réfringente (30, 36) déviant la lumière de manière orientée, sur une surface de base,
- disposition du ou des éléments plats (22, 24, 26, 28) de façon à ce qu'une surface prédéterminée, qui correspond à la surface de découplage de lumière (29), soit remplie entièrement ou à l'exception d'une ou plusieurs zones, dont les dimensions sont inférieures aux dimensions des éléments,
- liaison d'au moins une partie des éléments (22, 24, 26, 28) avec une ou plusieurs plaques (20) situées au-dessus ou en dessous, afin de créer une ou plusieurs unités,
- fixation de l'unité ou des unités dans une ouverture du boîtier du guide de lumière creux (3), de façon à ce que celles-ci limitent l'espace creux (8) du guide de lumière creux (3).

**19.** Procédé selon la revendication 18, **caractérisé en ce que**, entre ou à côté des éléments plats (22, 24, 26, 28), sont insérées deux entretoises (40 42) ou plus, au moins deux des entretoises (40, 42) présentant des dimensions différentes.

**20.** Procédé selon la revendication 18 ou 19, **caractérisé en ce que**, pour la formation du dispositif de découplage de lumière, plusieurs éléments plats (22, 24, 26, 28) avec une structure réfringente déviant la lumière de manière orientée sont juxtaposés, au moins deux éléments (22, 26, 24, 28) présentant la même forme et les mêmes dimensions.

**21.** Procédé selon l'une des revendications 18 à 20, **caractérisé en ce qu'**un ou plusieurs éléments plats sont reliés, à l'aide d'un cadre circulaire, avec une plaque stituée au-dessus ou en dessous.

Fig. 1

EP 1 085 251 B1

Fig. 2

Fig. 3

Fig. 4

Fig. 5

Fig. 6

EP 1 085 251 B1

Fig. 9

9   40   40

40

80   82

42   42   42

40   40

42

40   40

88   84   86

9   40   40

40   9

40

40   40

Fig. 7

40   40

59

58

40

EP 1 085 251 B1

9   40   40   40

40

40   60   42   42   42   68

40   62   64   66   40

9   40   40   40   40

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4542449 A